# EUROPÄISCHE PATENTSCHRIFT

(11) **EP 2 527 774 B1**
(45) Veröffentlichungstag und Bekanntmachung des Hinweises auf die Patenterteilung: **28.08.2013**
(21) Anmeldenummer: 11010146.6
(22) Anmeldetag: 22.12.2011
(51) Int. Cl.: F27D 7/04, F27D 19/00, F27D 21/00, F27D 99/00

(54) **Vorrichtung zum Beheizen von Ofenanlagen für Waren, insbesondere für Glaswaren, sowie hiermit versehene Ofenanlage**
Device for heating furnace assemblies for goods, in particular for glass goods and furnace assembly with same
Dispositif de chauffage d'installations de four pour marchandises, notamment pour marchandises en verre, ainsi qu'installation de four ainsi pourvue

(30) Priorität: 23.05.2011 DE 102011102984
(43) Veröffentlichungstag der Anmeldung: 28.11.2012
(73) Patentinhaber: Ernst Pennekamp GmbH & Co. OHG, 58256 Ennepetal (DE)
(72) Erfinder: Hoff, Klaus-Uwe, 42499 Hückeswagen (DE)
(74) Vertreter: Patentanwälte Buse, Mentzel, Ludewig

(56) Entgegenhaltungen:
- DE-A1-102005 057 238
- DE-B3-102007 014 472

## Beschreibung

Die Erfindung betrifft eine Vorrichtung zum Beheizen von Ofenanlagen für Waren, insbesondere für Glaswaren der im Oberbegriff von Anspruch 1 genannten Art, sowie eine Ofenanlage, die mit einer solchen Vorrichtung ausgestattet ist. Solche Vorrichtungen finden in der Industrie vielfältige Einsatzmöglichkeiten, insbesondere bei der Herstellung von Glaswaren aber auch bei der Produktion von Keramik und Porzellanwaren oder bei bestimmten Metallwaren. Die Ofenanlagen, die mit solchen Vorrichtungen versehen sind, können zum Brennen, Dekorieren, Anlassen, Entspannen oder auch Abkühlen der Waren dienen. Hierbei ist es wichtig, dass ganz bestimmte Temperaturen im Ofen vorherrschen.

Herkömmliche Ofenanlagen werden mittels eines Brenners beheizt, in welchem beispielsweise ein Gas/Luftgemisch verbrannt wird. Die so entstehenden heißen Gase werden dann üblicherweise mittels eines Edelstahlrohres in den Ofenraum hineingeführt. Problematisch ist hier jedoch, dass auch Edelstahlrohre auf Dauer durch die hohen Temperaturen der heißen Gase verzundern. Dies tritt dadurch ein, dass das Rohr mit dem heißen Medium in direkten Kontakt kommt und es zu Glühen anfängt. Durch die Verzunderung können feine Partikel in die Ofenatmosphäre gelangen. Dies ist jedoch unerwünscht, insbesondere bei der Herstellung hochwertiger Gläser, da sich diese Partikel auf den Waren absetzen und die Qualität der Waren vermindern können. Solche Rohre müssen daher häufig ausgetauscht werden, was aufwendig und teuer ist.

Die DE 10 2005 057 238 A 1 beschreibt eine Ofenanlage, die mit einem Flächenbrenner, insbesondere einem Flächenporenbrenner, ausgestattet ist. Direkt in der Nähe des Brenners, insbesondere unterhalb, ist ein Lüfter angeordnet, der das heiße Medium ansaugt und im Ofenraum verteilt. Kommt es jetzt bei dieser Anordnung dazu, dass der Lüfter das Medium nicht stark genug ansaugt, so kann durch die Porenkeramik des Brenners ein Rückschlag bis in die Gas/Luftzufuhr geschehen. Dies gilt es unbedingt zu vermeiden, da hierdurch Unfälle entstehen können, bei welchen Personen verletzt werden und auch hohe Sachschäden entstehen können.

Aufgabe der Erfindung ist es daher, eine Vorrichtung der eingangs genannten Art zu schaffen, die in ihrer Funktion sicherer ist und bei der sowohl Verzunderungen als auch Rückschläge vermieden werden. Weiterhin ist es Aufgabe der Erfindung, eine Ofenanlage zu schaffen, welche die vorerwähnten Nachteile vermeidet. Diese Aufgaben werden erfindungsgemäß durch die kennzeichnenden Merkmale von Anspruch 1 sowie durch Anspruch 10 gelöst, wobei den Merkmalen folgende besondere Bedeutung zukommt.

Die Gaszuführung, welche das Gas/Luftgemisch dem Flächenbrenner zuführt, besitzt einen Zuführdruck, welcher über eine Steuerung steuerbar ist. Zwischen dem Flächenbrenner und dem Lüfter ist wenigstens ein Drucksensor vorgesehen, welcher den Saugdruck des Lüfters erfasst. Das Ergebnis dieser Sensierung wird dann an die Steuerung weitergeleitet, welche je nach ermitteltem Saugdruck des Lüfters den Zuführdruck in der Gaszuführung erhöht oder verringert, so dass immer ein optimaler Zufluss an Gas/Luftgemisch an den Flächenbrenner abgegeben wird und keine Rückschläge in die Gaszuführung entstehen können. Die Vorrichtung kann dabei so ausgelegt werden, dass die Steuerung den Zuführdruck in der Gaszuführung erhöht, wenn der Saugdruck einen festgelegten ersten Grenzwert unterschreitet und/oder den Zuführdruck in der Gaszuführung wieder verringert, wenn der Saugdruck den gleichen ersten oder einen festgelegten zweiten Grenzwert überschreitet. Somit wird insgesamt eine sehr gleichmäßige Verbrennung des Gas/Luftgemisches erzielt und Rückschläge werden vermieden, so dass eine sehr sichere und gut funktionierende Vorrichtung geschaffen wird.

Als Drucksensor kann beispielsweise auch ein so genannter Druckschalter dienen, der beim Unterschreiten eines bestimmten, fest eingestellten Grenzwertes auslöst und den Zuführdruck in der Gaszuführung erhöht und danach, beim Überschreiten dieses Grenzwertes den Zuführdruck wieder verringert. Andere Arten von Drucksensoren sind jedoch ebenfalls denkbar; auch können zwei verschiedene Grenzwerte festgelegt bzw. eingestellt werden.

Gemäß Patentanspruch 10 wird eine Ofenanlage mit der Vorrichtung versehen, um eine gleichmäßig und sicher arbeitende Ofenanlage zu erhalten. Diese ist selbst für empfindliche Glaswaren oder auch andere Waren verwendbar.

In einem besonders bevorzugten Ausführungsbeispiel ist zwischen dem Flächenbrenner und dem Lüfter ein Leitelement vorgesehen, welches vorzugsweise aus einer Keramik, insbesondere aus einer faserfreien Keramik besteht und die am Flächenbrenner entstehende Wärme bzw. die am Flächenbrenner entstehenden Flammen in Richtung des Lüfters leitet. Durch das Einsetzen eines oder mehrere Leitelemente können verschiedenste Formen von Flächenbrennern Verwendung finden. Die entstehenden heißen Medien werden direkt dem Lüfter zugeführt, so dass dieser die heißen Medien optimal absaugen und in der Umgebung verteilen kann. Es ist somit je nach Ausführungsbeispiel möglich, den Flächenbrenner abgewinkelt auszuführen oder in Form eines Kreisringes oder eines oder mehrerer Ringsegmente. Falls dann ein oder mehrere Leitelemente Verwendung finden, können diese an die Form des Flächenbrenners jeweils optimal angepasst werden, um das heiße Medium an den Lüfter weiterzuleiten.

In einem weiteren bevorzugten Ausführungsbeispiel weist die Porenkeramik des Flächenbrenners eine hohe Schichtdicke auf. Besonders bewährt hat sich eine Schichtdicke von ca. 50 mm. Diese hat den Vorteil, dass sie relativ robust ist, was die Verarbeitung einfacher gestaltet. Außerdem ist die Porenkeramik wärmeisolierend. Bei einer höheren Schichtdicke wird somit kaum noch Wärme von der Verbrennungszone des Flächenbrenners an andere Bereiche abgegeben.

Die Halterung, in der sich der Flächenbrenner ggf. befindet bzw. ein Gehäuse oder ähnliche Einrichtungen, bleiben auch bei langem Betrieb des Flächenbrenners kühl. Auch kühlt der Flächenbrenner so nach der Außerbetriebnahme schnell ab, so dass er dann einfach und schnell von Bedienpersonen zu handhaben ist. Besonders günstig hat sich als Material eine Aluminiumoxidkeramik erwiesen. Diese ist preiswert in der Herstellung.

Weitere Vorteile und Ausführungsbeispiele der Erfindung ergeben sich aus der nachfolgenden Beschreibung, den Unteransprüchen und den Zeichnungen. In den Zeichnungen ist die Erfindung in einem Ausführungsbeispiel dargestellt. Es zeigen:
- Fig. 1:: eine komplette Vorrichtung mit Gehäuse und einem Lüfter perspektivisch von unten,
- Fig. 2:: die Vorrichtung aus Fig. 1 ohne Lüfter,
- Fig. 3:: die Vorrichtung mit Lüfter aber ohne Gehäuse perspektivisch von der Seite,
- Fig. 4:: die Vorrichtung aus Fig. 1 ohne Motor und Deckel,
- Fig. 5:: der Flächenbrenner mit Gaszuführung perspektivisch von unten,
- Fig. 6:: ein vergrößerter Ausschnitt des Flächenbrenners,
- Fig. 7:: der Ausschnitt aus Fig. 6 in einer anderen Perspektive.

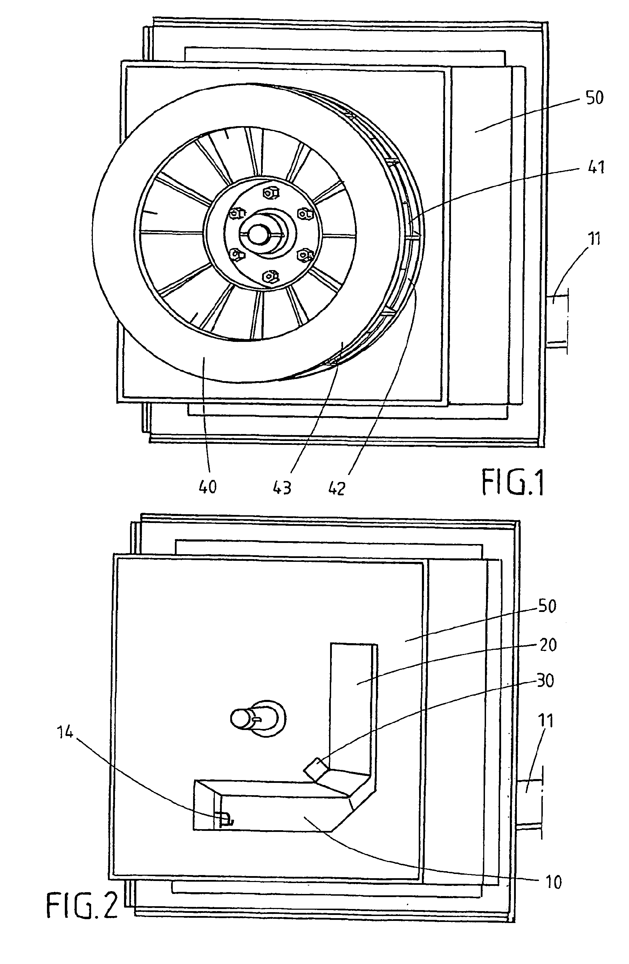

Fig. 1 zeigt eine erfindungsgemäße Vorrichtung perspektivisch von unten. Große Teile der Vorrichtung sind in einem Gehäuse 50 gekapselt. Man erkennt den Lüfter 40, der ein doppeltes Lüfterrad 41 besitzt. Die eine Seite 42 des doppelten Lüfterrades 41 saugt dabei das heiße Medium bzw. die vom Flächenbrenner 10 erzeugten heißen Gase an, wobei die andere Seite 43 des doppelten Lüfterrades 41 Umgebungsluft ansaugt. Im Lüfter 40 werden dann beide Medien miteinander vermischt und wieder an die Umgebung abgegeben. Hierdurch lässt sich in einem Ofen eine möglichst gleichmäßige Temperaturverteilung erzielen.

Fig. 2 zeigt die gleiche Vorrichtung in der gleichen Perspektive wie in Fig. 1 jedoch ohne den Lüfter 40. Man erkennt, dass das Gehäuse 50 den Bereich des Flächenbrenners 10 quasi frei lässt, um das heiße Medium ungehindert in Richtung des Lüfters 40 zu bringen. Hierzu dient auch das Leitelement 20, welches seiner Form nach der Form des Flächenbrenners 10 angepasst ist.

Des Weiteren ist der Drucksensor 30 erkennbar, der hier sehr schematisch dargestellt ist. Dieser Drucksensor 30 erkennt, ob der Lüfter 40 das vom Flächenbrenner 10 erzeugte heiße Medium noch korrekt absaugt oder ob der Saugdruck nachlässt wird. Die vom Drucksensor 30 ermittelten Ergebnisse werden dann der Steuerung des Zuführdruckes in der Gaszuführung 11 zugeführt, welche nötigenfalls den Zuführdruck in der Gaszuführung 11 erhöht oder verringert.

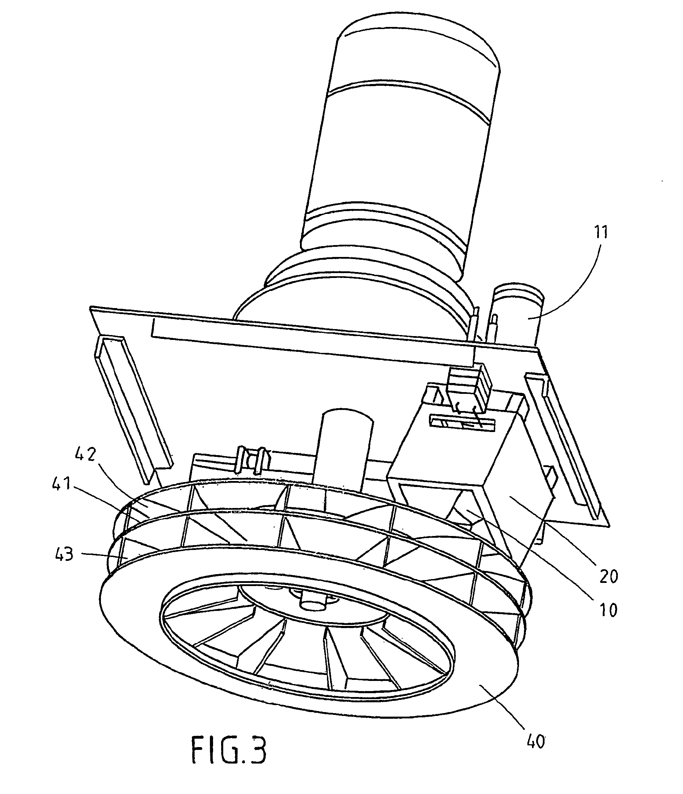

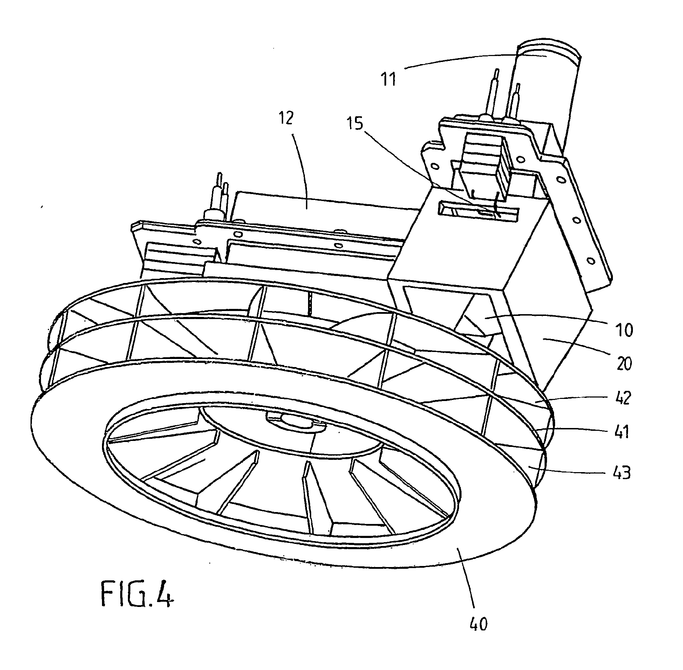

Der nähere Aufbau der Vorrichtung wird aus den Fig. 3 und 4 ersichtlich. Hier ist das Gehäuse 50 optisch entfernt worden. Man sieht, dass der Flächenbrenner 10 abgewinkelt ausgeführt ist. Hier sind selbstverständlich auch andere Geometrien und Formen denkbar. Das Leitelement 20 ist in seiner Form der Form des Flächenbrenners 10 angepasst. Im Normalbetrieb sind sowohl der Flächenbrenner 10 als auch das Leitelement 20 in dem Gehäuse 50 angeordnet. Das Leitelement 20 ist so ausgebildet, dass es das vom Flächenbrenner 10 erzeugte heiße Medium in Richtung des Lüfters 40 leitet.

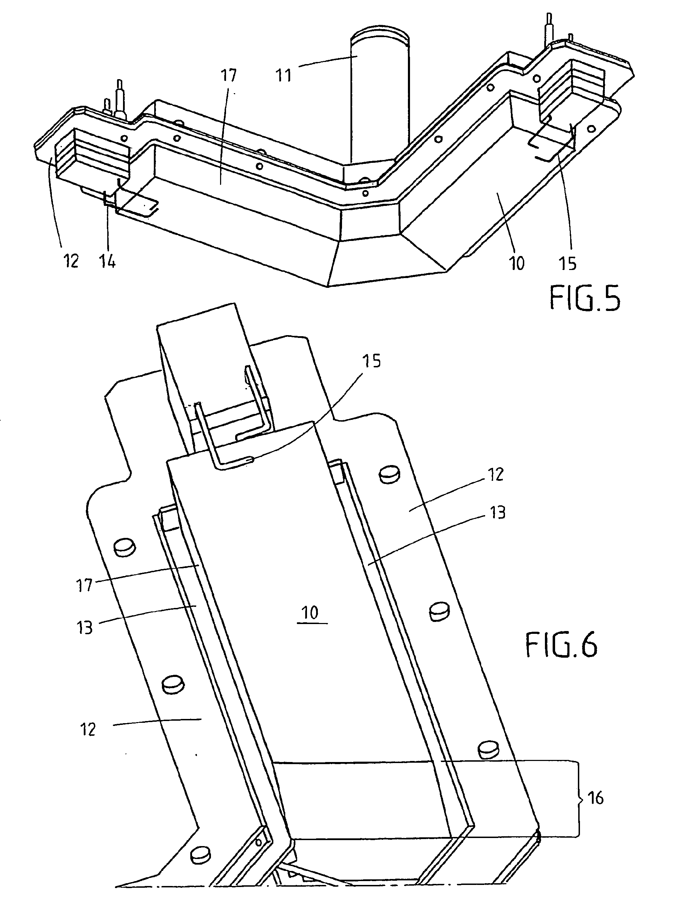

Fig. 5 zeigt nochmals den Flächenbrenner 10 mit der Gaszuführung 11. Die Gaszuführung 11 ist dabei an einer zentralen Stelle des Flächenbrenners 10 angeordnet, um eine möglichst gleichmäßige Gaszufuhr zu allen Bereichen des Flächenbrenners 10 zu ermöglichen. An seinem einen Ende weist der Flächenbrenner 10 eine Zündelektrode 14 auf, die dafür sorgt, dass das Gas/Luftgemisch entzündet wird und somit die notwendige Verbrennung startet. Am anderen Ende des Flächenbrenners 10 ist eine Ionisationselektrode 15 angeordnet. Diese stellt sicher, dass das Gas/Luftgemisch auch ausreichend ionisiert ist. Durch die Anordnung der Zündelektrode 14 und der Ionisationselektrode 15 an gegenüberliegenden Enden des Flächenbrenners 10 wird sichergestellt, dass das Gas/Luftgemisch auch über die gesamte Fläche des Flächenbrenners 10 verbrennt und nicht an einer Stelle Gas/Luftgemisch ungehindert in die Umgebung austritt.

Die Porenkeramik des Flächenbrenners 10 ist an ihren Außenseiten vollständig von einem gasdichten Material 17 umschlossen, beispielsweise einem Kitt, um zu verhindern, dass das Gas/Luftgemisch an den Seitenbereichen austritt und dort entweder unkontrolliert verbrennt oder ungehindert in die Umgebung ausströmt, wodurch eine explosive Atmosphäre entstehen könnte.

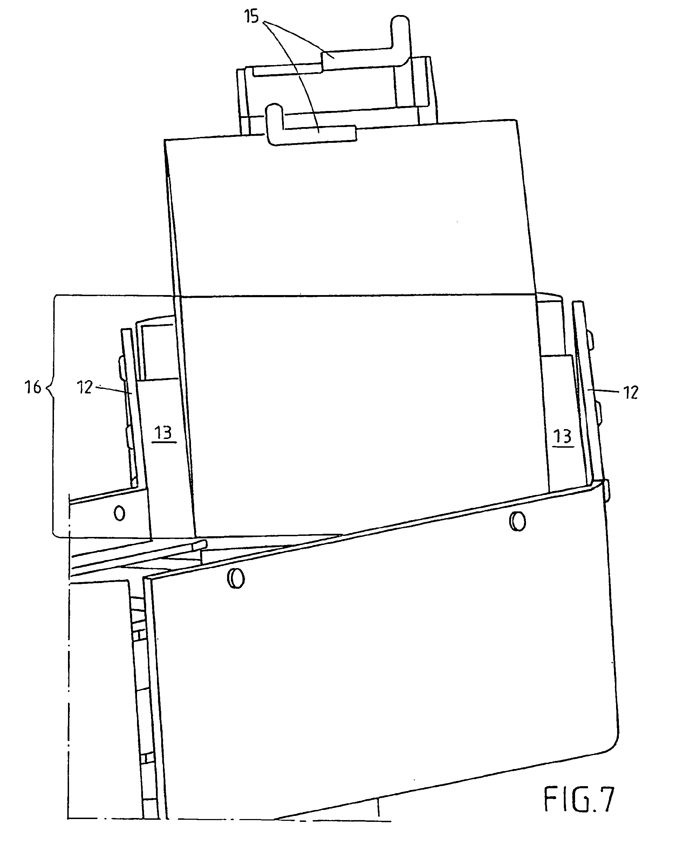

Die Fig. 6 und 7 schließlich zeigen, wie der Flächenbrenner 10 in der Vorrichtung angeordnet ist. Hierzu ist eine Halterung 12 vorgesehen, an welcher die Porenkeramik des Flächenbrenners 10 zumindest bereichsweise anordbar ist. Der Bereich 13 zwischen dem Flächenbrenner 10 und der Halterung 12 wird dann mit einem dichtenden und/oder klebenden Mittel ausgestattet, um eine sichere Lagerung des Flächenbrenners 10 an der Halterung 12 zu ermöglichen. Ist das Mittel dichtend, kann auch gleichzeitig verhindert werden, dass Gas/Luftgemisch in die Halterung 12 entweicht. Es ist auch möglich, die Halterung 12 ganz oder teilweise in dem Gehäuse 50 vorzusehen. Dies entscheidet sich je nach konkretem Aufbau des Gehäuses 50. Ist die Schichtdicke 16 der Porenkeramik des Flächenbrenners 10 relativ groß, insbesondere ca. 50 mm, so wird auch die beim Brennvorgang entstehende Wärme nicht auf das dichtende und/oder klebende Mittel übertragen, so dass hier auch kein speziell hochtemperaturbeständiges Mittel Verwendung finden muss.

Abschließend sei noch darauf hingewiesen, dass die hier dargestellten Ausführungsformen lediglich beispielshafte Verwirklichungen der Erfindung sind. Diese ist nicht darauf beschränkt. Es sind vielmehr noch Abgrenzungen und Abwandlungen möglich.

### Bezugszeichenliste:

- 10: Flächenbrenner
- 11: Gaszuführung
- 12: Halterung
- 13: Bereich
- 14: Zündelektrode
- 15: Ionisationselektrode
- 16: Schichtdicke von 10
- 17: Gasdichtes Material
- 20: Leitelement
- 30: Drucksensor
- 40: Lüfter
- 41: Doppeltes Lüfterrad
- 42: Eine Seite von 41
- 43: Andere Seite von 41
- 50: Gehäuse

## Patentansprüche

1. Vorrichtung zum Beheizen von Ofenanlagen für Waren, insbesondere für Glaswaren,
mit wenigstens einer Gaszuführung (11), durch welche ein Gas/Luftgemisch der Vorrichtung zuführbar ist,
mit zumindest einem Flächenbrenner (10), welcher nahe der Gaszuführung (11) anordnenbar ist und an dem das Gas/Luftgemisch verbrennbar ist, wodurch ein heißes Medium erzeugbar ist
wobei der Flächenbrenner (10) aus einer Porenkeramik besteht
und mit wenigstens einem Lüfter (40), durch welchen das heiße Medium vom Flächenbrenner (10) absaugbar ist wodurch ein Saugdruck entsteht,
**dadurch gekennzeichnet,**
**dass** eine Steuerung vorgesehen ist, mittels welcher der Zuführdruck, mit welchem das Gas/Luftgemisch durch die Gaszuführung (11) dem Flächenbrenner (10) zugeführt wird, steuerbar ist,
**dass** zwischen dem Flächenbrenner (10) und dem Lüfter wenigstens ein Drucksensor (30) vorgesehen ist, durch welchen Saugdruck sensierbar ist wobei das Ergebnis mittelbar oder unmittelbar an die Steuerung weiterleitbar ist,
**dass** der Zuführdruck in der Gaszuführung (11) durch die Steuerung erhöhbar ist, wenn der Saugdruck einen festgelegten ersten Grenzwert unterschreitet und/oder der Zuführdruck in der Gaszuführung (11) wieder verringerbar ist, wenn der Saugdruck den gleichen ersten oder einen festgelegten zweiten Grenzwert überschreitet
und **dass** zwischen dem Flächenbrenner (10) und dem Lüfter (40) wenigstens ein Leitelement (20) vorgesehen ist, welches vorzugsweise aus einer Keramik, insbesondere aus einer faserfreien Keramik, besteht und die am Flächenbrenner (10) entstehende Wärme bzw. die am Flächenbrenner (10) entstehenden Flammen in Richtung des Lüfters (40) leitet.

2. Vorrichtung nach Anspruch 1, **dadurch gekennzeichnet, dass** der Flächenbrenner (10) zumindest bereichsweise in einer Halterung (12) anordnenbar ist, wobei der Bereich (13) zwischen Flächenbrenner (10) und Halterung (12) mit einem dichtenden und/oder klebenden Mittel ausstattbar ist.

3. Vorrichtung nach einem der Ansprüche 1 oder 2, **dadurch gekennzeichnet, dass** der Flächenbrenner (10) abgewinkelt ist oder die Form eines Kreisringes oder eines oder mehrerer Ringsegmente aufweist, wobei bei Verwendung eines Leitelementes (20) dieses an die Form des Flächenbrenners (10) angepasst ist.

4. Vorrichtung nach einem der Ansprüche 1 bis 3, **dadurch gekennzeichnet, dass** der Lüfter (40) ein doppeltes Lüfterrad (41) aufweist, welches auf seiner einen Seite (42) das heiße Medium ansaugt, auf seiner anderen Seite (43) aber Umgebungsluft ansaugt, wobei beides miteinander vermischt wieder abgegeben wird.

5. Vorrichtung nach einem der Ansprüche 1 bis 4, **dadurch gekennzeichnet, dass** der Flächenbrenner (10) und/oder das Leitelement (20) und/oder die Halterung (12) ganz oder teilweise in einem Gehäuse (50) angeordnet sind.

6. Vorrichtung nach einem der Ansprüche 1 bis 5, **dadurch gekennzeichnet, dass** am Flächenbrenner (10) wenigstens eine Zündelektrode (14) und vorzugsweise deutlich beabstandet von der Zündelektrode (14) noch eine Ionisationselektrode (15) vorgesehen sind.

7. Vorrichtung nach einem der Ansprüche 1 bis 6, **dadurch gekennzeichnet, dass** die Porenkeramik des Flächenbrenners (10) eine hohe Schichtdicke (16) aufweist, insbesondere dass diese ca. 50 mm beträgt und dass die Porenkeramik vorzugsweise aus einer Aluminiumoxidkeramik besteht.

8. Vorrichtung nach einem der Ansprüche 1 bis 7, **dadurch gekennzeichnet, dass** der Flächenbrenner (10) an seiner Außenseite mit einem gasdichten Material (17) verkleidet ist.

9. Ofenanlage für Waren, insbesondere für Glaswaren, mit wenigstens einer Vorrichtung nach einem der Ansprüche 1 bis 8.

## Claims

1. Device for heating furnace assemblies for goods, in particular for glass goods,
with a minimum of one gas supply line (11), through which a supply of a gas/air mixture is fed to the device,
with a minimum of one surface burner (10), which is arranged close to the gas supply line (11) and is combustible using the gas/air mixture, whereby, a hot medium is generated
whereby, the surface burner (10) consists of porous ceramic
and consists of a minimum one fan (40), through which the hot medium can be extracted from the surface burner (10), whereby, a suction pressure is generated,
**characterized in that**,
a control is provided that controls the feed pressure of the gas/air mixture supplied to the surface burner (10) through the gas supply line (11),
that a minimum of one pressure sensor (30) is provided between the surface burner (10) and the fan, through which suction pressure is sensed, whereby, the result can be transmitted directly or indirectly to the control,
that the supply pressure in the gas supply line (11) can be increased by the control if the suction pressure is less than an initial determined limit value and/or the supply pressure in the gas supply line (11) can be decreased if the suction pressure exceeds the same initial, or second determined limit value
and that there is a minimum of one control element (20) provided between the surface burner (10) and fan (40), which is preferably made from ceramic, in particular a fibre-free ceramic and the heat generated, or the flame generated at the surface burner (10), is ducted towards the fan (40).

2. Device according to claim 1, **characterized in that** the surface burner (10) is arranged in a bracket (12), or at least partly, whereby, the area (13) between the surface burner (10) and the bracket (12) has a sealing and/or adhesive material

3. Device according to one of the claims 1 or 2, **characterized in that** the surface burner (10) is at an angle or in the form of an annulus or features one or more ring elements, whereby, when using a control element (20), this adapts to the form of the surface burner (10).

4. Device according to one of the claims 1 to 3, **characterized in that** the fan (40) features a double impeller (41) which extracts the hot medium on one side (42), however, on the other side (43), draws in ambient air, whereby, both are mixed and again discharged.

5. Device according to claims 1 to 4, **characterized in that** the surface burner (10) and/or the control element (20) and/or the bracket (12) are completely or partly arranged in a housing (50).

6. Device according to claims 1 to 5, **characterized in that** the surface burner (10) is provided with a minimum of one ignition electrode (14) and provided with another ionization electrode (15), preferably clearly spaced from the ignition electrode (14).

7. Device according to claims 1 to 6, **characterized in that** the porous ceramic of the surface burner (10) features a high layer thickness (16), in particular that this is approx. 50 mm and that the porous ceramic is preferably made from aluminium oxide ceramics.

8. Device according to claims 1 to 7, **characterized in that** the surface burner (10) is cladded with a gas-tight material (17) on the outside.

9. Furnace for goods, in particular for glass goods, with a minimum of one device according to one of the claims 1 to 8.

## Revendications

1. Dispositif de chauffage d'installations de four pour marchandises, notamment pour marchandises en verre,
comprenant au moins un conduit d'amenée de gaz (11) permettant d'amener au dispositif un mélange de gaz et d'air,
au moins un brûleur à surface radiante (10) qu'il est possible d'agencer près du conduit d'amenée de gaz (11) et sur lequel il est possible de faire brûler le mélange gaz / air, ce qui permet de générer un fluide très chaud,
sachant que le brûleur à surface radiante (10) se compose d'une céramique poreuse
et comprenant au moins un ventilateur (40) à travers lequel il est possible d'aspirer le fluide très chaud venant du brûleur à surface radiante (10), ce qui engendre une dépression,
**caractérisé en ce que**
une commande est prévue au moyen de laquelle est pilotable la pression d'amenée à laquelle le mélange gaz / air est amené au brûleur à surface radiante (10) par le conduit d'amenée de gaz (11),
**en ce qu'**entre le brûleur à surface radiante (10) et le ventilateur est prévu au moins un capteur de pression (30) permettant de détecter la pression d'aspiration, sachant qu'il est possible de transmettre le résultat directement ou indirectement à la commande,
**en ce que** la commande permet de hausser la pression d'amenée dans le conduit d'amenée de gaz (11) lorsque la pression d'aspiration descend en dessous d'un premier seuil défini et/ou **en ce que** la commande permet de réduire à nouveau la pression d'amenée dans le conduit d'amenée (11) lorsque la pression d'aspiration monte au dessus de ce même seuil ou d'un second seuil défini
et **en ce qu'**entre le brûleur à surface radiante (10) et le ventilateur (40) est prévu au moins un élément de guidage (20) qui se compose de préférence d'une céramique, notamment d'une céramique exempte de fibres, et qui conduit la chaleur engendrée par le brûleur à surface radiante (10) et/ou les flammes engendrées par le brûleur à surface radiante (10) en direction du ventilateur (40).

2. Dispositif selon la revendication 1, **caractérisé en ce que** le brûleur à surface radiante (10) est agençable au moins localement dans une fixation (12), sachant que la zone (13) comprise entre le brûleur à surface radiante (10) et la fixation (12) peut être équipé d'un produit étanchéisant et/ou collant.

3. Dispositif selon l'une des revendications 1 ou 2, **caractérisé en ce que** le brûleur à surface radiante (10) est coudé ou présente la forme d'un anneau circulaire ou d'un ou plusieurs segments annulaires, sachant que lors de l'utilisation d'un élément de guidage (20), ce dernier est adapté à la forme du brûleur à surface radiante (10).

4. Dispositif selon l'une des revendications 1 à 3, **caractérisé en ce que** le ventilateur (40) présente une double roue (41) qui sur un côté (42) sien aspire le fluide très chaud, mais aspire de l'air ambiant sur l'autre côté (43), sachant qu'ensuite tous deux ressortent mélangés entre eux.

5. Dispositif selon l'une des revendications 1 à 4, **caractérisé en ce que** le brûleur à surface radiante (10) et/ou l'élément de guidage (20) et/ou la fixation (12) sont agencés entièrement ou partiellement dans un boîtier (50).

6. Dispositif selon l'une des revendications 1 à 5, **caractérisé en ce que** sur le brûleur à surface radiante (10) sont prévues au moins une électrode d'allumage (14) et, en plus, une électrode d'ionisation (15) de préférence à une nette distance de l'électrode d'allumage (14).

7. Dispositif selon l'une des revendications 1 à 6, **caractérisé en ce que** la céramique poreuse du brûleur à surface radiante (10) présente une forte épaisseur (16) de couche, **en ce que** cette épaisseur est d'environ 50 mm et que la céramique poreuse se compose de préférence d'une céramique à l'oxyde d'aluminium.

8. Dispositif selon l'une des revendications 1 à 7, **caractérisé en ce que** le brûleur à surface radiante (10) est capoté sur son côté extérieur avec un matériau (17) étanche aux gaz.

9. Installation de four pour marchandises, notamment pour marchandises en verre, avec au moins un dispositif selon l'une des revendications 1 à 8.
